# FASCICULE DE BREVET EUROPEEN

(11) **EP 0 686 475 B1**
(45) Date de publication et mention de la délivrance du brevet: **08.07.1998**
(21) Numéro de dépôt: 95401117.7
(22) Date de dépôt: 15.05.1995
(51) Int. Cl.: B29C 47/12, B60J 10/08, B29C 47/00

(54) **Procédé et dispositif pour la réalisation par extrusion d'un joint à lèvre variable, notamment pour véhicule automobile, et joint ainsi obtenu**
Verfahren und Vorrichtung für die Herstellung einer Dichtung mit variabler Lippe durch Extrudieren, insbesondere für Kraftfahrzeuge, und auf diese Weise hergestellte Dichtung
Seal for automobile having variable lip, method and apparatus for producing same by extrusion

(30) Priorité: 07.06.1994 FR 9406943
(43) Date de publication de la demande: 13.12.1995
(73) Titulaire: AUTOMOBILES PEUGEOT, 75116 Paris (FR); AUTOMOBILES CITROEN, 92200 Neuilly-sur-Seine (FR)
(72) Inventeur: Blanchet, Jean-Yves, F-35160 Le Verger (FR); Leroux, Norbert, F-35770 Vern Sur Seiche (FR)
(74) Mandataire: Robert, Jean-François

(56) Documents cités:
- EP-A- 0 118 397
- EP-A- 0 412 217
- DE-A- 4 034 433
- US-A- 4 256 685
- US-A- 4 445 838
- PATENT ABSTRACTS OF JAPAN vol. 11 no. 321 (M-633) ,20 Octobre 1987 & JP-A-62 103125 (TATSUTA ELECTRIC WIRE & CABLE CO. LTD.) 13 Mai 1987,
- PATENT ABSTRACTS OF JAPAN vol. 18 no. 220 (M-1595) ,20 Avril 1994 & JP-A-06 016038 (TOKAI KOGYO K.K.) 25 Janvier 1994,

## Description

La présente invention est relative à un procédé et à un dispositif pour la réalisation par extrusion d'un joint d'étanchéité à lèvre variable, notamment pour véhicule automobile. L'invention concerne également le joint ainsi obtenu.

Il a déjà été proposé dans la demande de brevet FR-2 579 927 un dispositif pour la fabrication par extrusion d'un joint d'étanchéité présentant une lèvre dont la hauteur varie dans la longueur dudit joint.

Ce dispositif comporte une filière d'extrusion dont l'orifice est une fente qui présente une première section pour l'extrusion du pied du joint et une deuxième section, s'étendant à partir de la première, pour l'extrusion de la lèvre du joint. Un coulisseau se déplace devant la deuxième section de la fente pour régler la hauteur de la lèvre extrudée. Ce coulisseau présente lui-même deux fentes disjointes : l'une pour l'extrusion de la lèvre, l'autre pour l'évacuation de la matière extrudée qui est en trop.

Un tel dispositif ne permet cependant que de faire varier la hauteur de la lèvre du joint extrudé. L'orientation de la lèvre par rapport à son pied est la même sur toute la longueur du joint.

Or, il peut être souhaitable, notamment dans le cas des étanchéités de carrosseries automobiles, de disposer de joints continus dont la lèvre présente une orientation évolutive par rapport au pied qui la porte.

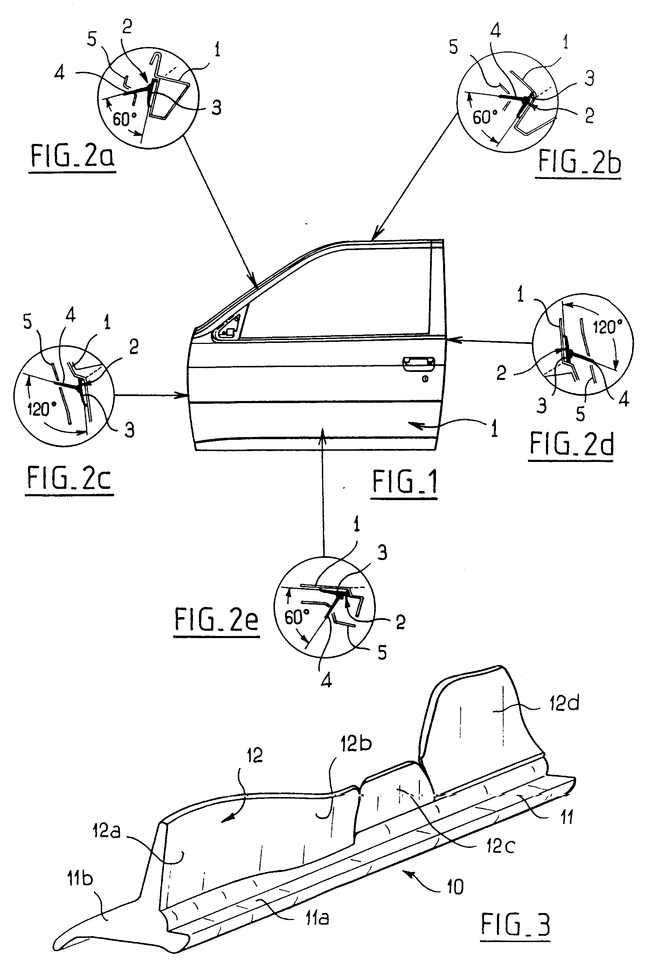

A titre d'exemple, on a représenté sur la figure 1 une portière 1 de véhicule automobile, ainsi que sur les figures 2a à 2e des vues en coupe en plusieurs zones de cette portière 1 et d'un joint 2 qui l'entoure de façon continue. Le joint 2 a été représenté tel qu'il est disposé par rapport à la portière 1 lorsque celle-ci est ouverte et qu'il n'est pas écrasé. Il présente un pied 3 et une lèvre 4.

On a également représenté sur ces figures 2a à 2e la tôle de la partie dormante 5 de la carrosserie du véhicule dans la position qu'elle présente par rapport à 1a portière 1 lorsque celle-ci est fermée.

On voit sur ces figures 1 et 2a à 2e que, selon les zones de l'ouvrant où l'on se trouve, l'angle entre le pied 3 et la lèvre 4 est de 60° (zones en haut et en bas de la portière 1 - figures 2a, 2b et 2e) ou de 120° (zones latérales de la portière 1 - figures 2c et 2d). Cette variation de l'angle de la lèvre 4 par rapport au pied 3 du joint 2 est destinée à assurer un contact optimum entre le joint 2, la tôle de la portière 1 et la partie dormante 5 de la carrosserie.

A ce jour, on réalise ces évolutions d'orientation de la lèvre en utilisant des techniques de surmoulage.

Or, les techniques de surmoulage nécessitent un outillage coûteux. En outre, les temps de réalisation sont importants.

Egalement, l'esthétique des joints obtenus par ces techniques n'est pas satisfaisante, puisque les parties surmoulées et les parties extrudées présentent un aspect différent.

Par ailleurs, le document EP-A-0 118 397 décrit un procédé selon le préambule de la revendication 1 dans lequel les changements d'orientation de la lèvre sont obtenus en mettant en contact, lorsque cela est nécessaire, le matériau sortant de la filière avec une surface fixe de profil continûment variable.

L'invention a pour but de pallier ces inconvénients.

Elle propose à cet effet un procédé pour la réalisation d'un joint d'étanchéité, notamment pour véhicule automobile, ce joint présentant un pied de fixation et une lèvre, dans lequel on extrude un flux de matière à travers une filière dont l'orifice d'extrusion présente une première section qui correspond au pied du joint et une deuxième section qui s'étend à partir de la première et qui correspond à la lèvre du joint, caractérisé en ce que l'on fait varier l'orientation de la deuxième section par rapport à la première au cours de l'extrusion, de sorte que la partie du profilé extrudé qui correspond à la lèvre présente, par rapport à la partie du profilé extrudé qui correspond au pied, une orientation qui varie dans la longueur dudit profilé.

Conformément à un mode de mise en oeuvre avantageux de l'invention, on divise le flux de matière en deux flux que l'on dirige l'un vers la première section, l'autre vers la deuxième section, la variation de l'orientation de la deuxième section par rapport à la première s'accompagnant d'un déplacement correspondant du premier flux par rapport au deuxième flux.

Dans le cas où le pied et la lèvre du joint sont en une même matière, les deux flux sont par exemple issus d'une même alimentation. Le pied et la lèvre du joint peuvent néanmoins être coextrudés en des matériaux différents. Les deux flux sont alors des flux de matières différentes.

L'invention propose également un dispositif pour la réalisation d'un joint d'étanchéité, notamment pour véhicule automobile, ce joint présentant un pied et une lèvre, ce dispositif comportant une filière à travers laquelle un flux de matière est extrudé, cette filière présentant un orifice d'extrusion qui présente une première section qui correspond au pied du joint et une deuxième section qui s'étend à partir de la première et qui correspond à la lèvre, caractérisé en ce que la deuxième section est mobile et en ce que le dispositif comporte des moyens d'entraînement pour faire varier l'orientation de la deuxième section par rapport à la première au cours d'une extrusion.

L'invention porte en outre sur un joint d'étanchéité extrudé selon le procédé de la revendication 1.

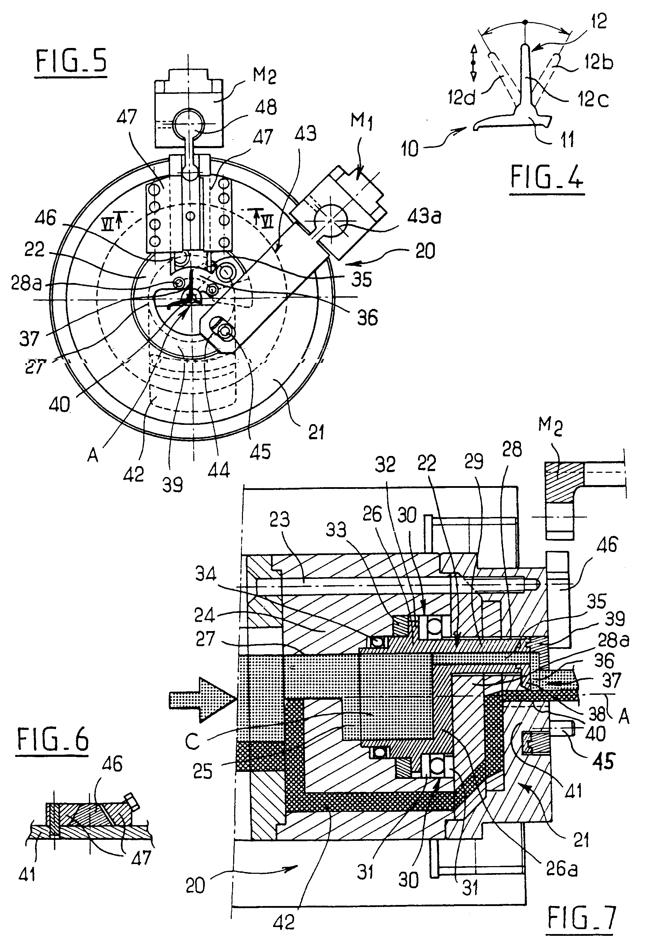

D'autres caractéristiques et avantages de l'invention ressortiront encore de la description qui suit. Cette description est purement illustrative et non limitative. Elle doit être lue en regard des dessins annexés sur lesquels :
. la figure 1, qui a déjà été discutée, représente en vue de côté une portière avant gauche de véhicule automobile ;
. les figures 2a à 2e, également discutées, représentent en vue en coupe les tôles de la portière de la figure 1 et de la partie dormante de la carrosserie, ainsi que le joint entourant de façon continue cette portière en plusieurs zones du contour de celle-ci ;
. la figure 3 est une représentation en perspective d'un joint d'étanchéité conforme à l'invention ;
. la figure 4 est une vue en coupe du joint de la figure 3, la lèvre de ce joint ayant été représentée en traits pleins et en traits interrompus selon différentes orientations possibles par rapport au pied ;
. la figure 5 est une vue en coupe transversale d'une filière d'extrusion d'un dispositif conforme à l'invention ;
. la figure 6 est une vue en coupe selon la ligne VI-VI de la figure 5 d'un élément de la filière de la figure 5 ;
. la figure 7 est une vue en coupe axiale de la filière de la figure 5.

On se référera d'abord aux figures 3 et 4.

Le joint 10 qui y a été représenté comporte principalement un pied 11 et une lèvre 12.

Le pied 11 est une semelle de section constante. Il présente une forme adaptée à son collage sur l'ouvrant de carrosserie de véhicule automobile auquel il est destiné.

La lèvre 12 est de hauteur et d'orientation évolutives dans la longueur du pied 11. Dans l'exemple illustré sur la figure 3, elle présente une portion 12a orientée sensiblement perpendiculairement par rapport au plan général du pied 11, ainsi qu'une portion 12b prolongeant de façon continue cette portion 12a. Sur cette portion 12b, la lèvre 12 est basculée progressivement dans la longueur du joint 10 vers l'un des côtés du pied 11 (côté 11a) jusqu'à être orientée à 60° par rapport à ce côté. La hauteur de cette portion 12b diminue également progressivement à partir de la portion 12a. Au-delà de la portion 12b, le pied 11 porte une portion 12c orientée de la même façon que la portion 12a et de hauteur inférieure. Cette portion 12c se prolonge de façon continue par une portion 12d basculée de l'autre côté (côté 11b) du pied 11 et orientée à 120° par rapport au côté 11a.

Comme on l'aura compris et ainsi que l'illustrent les doubles flèches sur la figure 4, le joint 10 conforme à l'invention présente une lèvre 12 dont la hauteur et l'orientation par rapport au pied 11 varient (simultanément ou indépendamment) dans la longueur dudit joint 10.

On se réfère maintenant aux figures 5 et 7 sur lesquelles a été représentée une filière 20 d'un dispositif conforme à l'invention. Cette filière 20 est montée sur la tête d'une extrudeuse à vis classique (non représentée) qui alimente la filière 20 en un flux de matière (ou de mélanges de matières) du type élastomère ou plastomère (flèche sur la figure 7).

Il est à noter que le pied et la lèvre du joint peuvent également être en des matériaux différents ; dans ce cas, l'extrudeuse fournit deux flux différents.

Cette filière 20 comporte un ensemble fixe 21 dans lequel est reçu un ensemble mobile 22 apte à pivoter dans cet ensemble fixe 21 autour d'un axe A.

L'ensemble fixe 21 est constitué de plusieurs pièces assemblées selon la direction axiale de la filière 20 par des vis 23. Il comprend en particulier une pièce centrale 24 qui présente un évidement 25 de forme de révolution autour de l'axe A. Cet évidement 25 reçoit une partie 26 de l'ensemble mobile 22. Cette partie 26 présente une section droite de forme générale en U et définit avec l'évidement 25 une chambre C dans laquelle la matière est reçue. Cette chambre C est alimentée par un canal 27 en aval de l'alimentation de l'extrudeuse, ce canal 27 débouchant dans l'évidement 25. Cet évidement 25 se prolonge en outre en aval par une ouverture 28 recevant un bras d'alimentation 29 qui est d'une pièce avec la partie 26.

Le fond 26a de cette partie 26 est opposé au canal 27 et s'étend perpendiculairement à la direction d'écoulement de la matière. Ce fond 26a définit ainsi une surface importante qui constitue une portée sur laquelle le flux de matière en provenance du canal 27 exerce une pression en direction de l'avant de la filière 20.

Une butée à billes 30 entourant la partie 26 est interposée entre ladite partie 26 et la pièce 24 pour permettre le pivotement de ladite partie 26 dans l'évidement 25. Cette butée à billes 30 comprend deux paliers annulaires 31 juxtaposés l'un à la pièce qui fait partie de l'ensemble fixe 21 et qui se trouve à l'avant de la pièce 24, l'autre à un épaulement annulaire externe 32 que présente la partie 26. Cet épaulement annulaire 32 vient se plaquer sur la butée à billes 30, sous l'effet de la pression que le flux de matière exerce sur la portée que constitue le fond 26a, pour assurer la rotation de la partie mobile 26.

Les moyens assurant la rotation de la partie 26 comportent également une bague en bronze 33 entourant la partie 26 de l'autre côté de l'épaulement 32.

Un joint dynamique haute pression rotatif 34 est en outre interposé en amont de la bague 33 entre la partie 26 et la pièce 24. Ce joint 34 assure une étanchéité parfaite entre la partie 26 et la pièce 24 et permet d'éviter toute infiltration de matière entre la bague de bronze 33 et la butée à billes 30.

On notera qu'en l'absence d'un tel moyen assurant une étanchéité parfaite entre la pièce 24 et la partie 26, la matière extrudée pourrait s'infiltrer et bloquer l'ensemble mobile 22 dans son mouvement de rotation.

L'ouverture 28 est un secteur tubulaire qui présente une saillie longitudinale intérieure 28a en arc de cylindre qui définit l'axe matériel autour duquel pivote le bras d'alimentation 29.

Le bras 29 est traversé par un canal longitudinal 35 cylindrique de petit diamètre. Ce canal 35 communique par son extrémité amont avec la chambre C. Il débouche à son extrémité aval sur un canal 36 transversal alimentant une fente de sortie 37 par laquelle la lèvre du joint est extrudée.

Le canal 36 est délimité par deux plaques 38 et 39 qui font partie de l'ensemble mobile 22. Ces deux plaques 38 et 39 sont de forme générale annulaire et présentent chacune en partie supérieure un retour vers l'axe A de la filière. La plaque 39 est la plaque de calibrage sur laquelle est ménagée la fente de sortie 37.

Cette fente 37 s'étend transversalement selon une direction qui dépend de l'orientation de l'ensemble mobile 22 dans l'ensemble fixe 21.

Elle débouche par sa partie inférieure sur une fente 40 définie sur une deuxième plaque de calibrage 41, qui fait partie de l'ensemble fixe 21. Cette fente 40 sert à l'extrusion du pied du joint. Elle est sensiblement située au niveau de l'axe A, la direction d'extrusion étant parallèle à l'axe A.

Un canal 42, dérivé du canal d'alimentation 27 dans la pièce 24, conduit une partie du flux de matière en sortie de la tête de l'extrudeuse jusqu'à la fente 40.

L'ensemble mobile 22 est entraîné en rotation par un bras 43 présentant à son extrémité une lumière 44 passée sur un pion 45 en saillie par rapport à l'anneau externe 39. Ce bras 43 est par exemple terminé par une biellette 43a dont le mouvement est commandé par un moyen moteur M1, tel qu'un moteur électrique ou un circuit hydraulique ou pneumatique, qui déplace l'extrémité de ladite biellette 43a en translation. Ce moyen moteur M1 est lui-même contrôlé par un automate de régulation (non représenté).

La filière 20 comporte également un couteau 46 coulissant dans une glissière 47 située au-dessus de la fente 37 pour ajuster la hauteur de la lèvre extrudée, conformément aux principes décrits dans FR-2.579.927, dont l'enseignement est ici inclus par référence. La glissière 47 est portée par l'ensemble fixe 21. Ce couteau 46 présente, conformément à un aspect avantageux de l'invention, une tranche d'extrémité sensiblement incurvée de façon concave qui s'étend sur un secteur angulaire suffisant pour permettre de faire varier la hauteur de la lèvre extrudée pour toutes les orientations possibles de la fente 37 par rapport à l'ensemble fixe 21.

Le déplacement du couteau 46 est commandé par une biellette 48 articulée sur ledit couteau et sur un moyen moteur M2 analogue à celui qui commande le déplacement de la biellette du bras 43. Ce moyen moteur M2 est contrôlé par le même automate que celui qui commande le moyen moteur M1.

On notera que la structure de filière qui vient d'être décrite présente l'avantage de permettre de faire tourner la veine de matière (canal 35) qui alimente la fente 37 d'extrusion de la lèvre en même temps que l'on fait varier l'orientation de cette fente 37.

## Revendications

1. Procédé pour la réalisation d'un joint d'étanchéité (10), notamment pour véhicule automobile, ce joint (10) présentant un pied de fixation (11) et une lèvre (12), dans lequel on extrude un flux de matière à travers une filière (20) dont l'orifice d'extrusion (37,40) présente une première section (40) qui correspond au pied (11) du joint (10) et une deuxième section (37) qui s'étend à partir de la première section (40) et qui correspond à la lèvre (12) du joint (10), caractérisé en ce que l'on fait varier l'orientation de la deuxième section (37) par rapport à la première (40) au cours de l'extrusion, de sorte que la partie du profilé extrudé qui correspond à la lèvre (12) présente, par rapport à la partie du profilé extrudé qui correspond au pied (11), une orientation qui varie dans la longueur dudit profilé.

2. Procédé selon la revendication 1, caractérisé en ce qu'on divise le flux de matière en deux flux que l'on dirige l'un vers la première section (40), l'autre vers la deuxième section (37), et en ce que la variation de l'orientation de la deuxième section (37) s'accompagne d'un déplacement correspondant du premier flux par rapport au deuxième flux.

3. Procédé selon l'une des revendications 1 ou 2, caractérisé en ce qu'on fait varier au cours de l'extrusion la hauteur de la partie du profilé extrudé qui correspond à la lèvre (12).

4. Dispositif pour la réalisation d'un joint d'étanchéité (10), notamment pour véhicule automobile, ce joint (10) présentant un pied (11) et une lèvre (12), ce dispositif comportant une filière (20) à travers laquelle un flux de matière est extrudé, cette filière (20) présentant un orifice d'extrusion (37, 40) qui présente une première section (40) qui correspond au pied (11) du joint (10) et une deuxième section (37) qui s'étend à partir de la première section et qui correspond à la lèvre (12), caractérisé en ce que la deuxième section (37) est mobile et en ce que le dispositif comporte des moyens d'entraînement (43, 43a, 44, 45, M1) pour faire varier l'orientation de la deuxième section (37) par rapport à la première (40) au cours d'une extrusion.

5. Dispositif selon la revendication 4, caractérisé en ce que la deuxième section (37) pivote par rapport à la première section (40) autour d'un axe (A) qui est parallèle à la direction d'extrusion et qui est situé au voisinage de la première section (40).

6. Dispositif selon la revendication 5, caractérisé en ce que la première section (40) est alimentée par une partie du flux de matière par un canal (42) traversant une partie fixe (21) de la filière (20), la deuxième section (37) étant alimentée par une autre partie du flux de matière par un canal (27, C, 35, 36) qui traverse une partie (22) de la filière (20) qui est mobile en pivotement par rapport à la partie fixe (21) autour de l'axe de pivotement (A) de la deuxième section (37) par rapport à la première section, le pivotement de la deuxième section (37) par rapport à la première (40) entraînant celui de la partie mobile (22) par rapport à la partie fixe (21).

7. Dispositif selon l'une des revendications 4 à 6, caractérisé en ce qu'au moins un joint annulaire dynamique haute pression (34) est interposé entre la partie mobile (22) et la partie fixe (21), ce joint (34) étant disposé en amont de moyens (30, 33) qui assurent le pivotement de la partie mobile (22) par rapport à la partie fixe (21), de façon à isoler ces moyens (30, 33) de la matière extrudée.

8. Dispositif selon la revendication 7, caractérisé en ce que les moyens de pivotement comportent une butée à billes (30) interposée entre une portée que présente la partie fixe (21) et un épaulement annulaire (32) externe que présente la partie mobile (22), les moyens de pivotement comportant également une bague de pivotement (33) entourant la partie mobile (22) en amont de l'épaulement annulaire (32).

9. Dispositif selon la revendication 8, caractérisé en ce que la partie mobile (22) présente une chambre (C) communiquant avec le canal (27, C, 35, 36) d'alimentation qui traverse ladite partie mobile (22), cette chambre (C) présentant un fond (26a) qui constitue une portée sur laquelle la matière exerce une pression qui plaque l'épaulement annulaire (32) sur la butée à billes (30).

10. Dispositif selon l'une des revendications 4 à 9, caractérisé en ce que les moyens d'entraînement de la deuxième section d'extrusion (22) comportent un bras (43) articulé par une biellette (43a) sur des moyens moteurs (M1) déplaçant de façon commandée une extrémité de ladite biellette (43a) en translation, ledit bras (43) présentant, à son extrémité opposée à la biellette (43a), une lumière (44) coopérant avec un téton (45) solidaire de la pièce mobile (39) sur laquelle la deuxième section (37) est ménagée.

11. Dispositif selon l'une des revendications 4 à 10, caractérisé en ce qu'il comprend en outre des moyens (46, 47, 48, M2) pour faire varier la hauteur de la partie du profilé à extruder qui correspond à la lèvre (12) au cours d'une extrusion.

12. Dispositif selon la revendication 11, caractérisé en ce que ces moyens comportent un couteau (46) apte à coulisser dans des moyens formant guide (47) portés par une pièce fixe (41) de la filière (20), le dispositif comportant des moyens (48, M2) pour l'entraînement du couteau (46), qui déplacent la tranche de celui-ci devant la deuxième section (37), de façon à faire varier la hauteur de la partie du profilé extrudé qui correspond à la lèvre (12) au cours d'une extrusion.

13. Dispositif selon la revendication 12, caractérisé en ce que la tranche du couteau (46) est sensiblement incurvée de façon concave et couvre un secteur angulaire suffisant pour pouvoir faire varier la hauteur de la partie du profilé extrudé qui correspond à la lèvre (12) pour toutes les orientations possibles de la deuxième section (37) par rapport à la première (40).

14. Dispositif selon l'une des revendications 4 et suivantes, caractérisé en ce que les moyens d'entraînement du couteau (46) comprennent une biellette (48) articulée sur le couteau (46) et sur des moyens moteurs (M2) déplaçant de façon commandée l'extrémité de ladite biellette (48) selon un mouvement de translation.

15. Joint d'étanchéité extrudé (10) produit selon le procédé d'après l'une des revendications 1 à 3.

## Claims

1. Method for producing a gasket (10), particularly for a motor vehicle, said gasket (10) having a fastening base (11) and a lip (12), in which a flow of material is extruded through a die (20), the extrusion orifice (37, 40) of which has a first section (40) that corresponds to the base (11) of the gasket (10) and.a second section (37) that extends from the first section (40) and corresponds to the lip (12) of the gasket (10), characterised in that the orientation of the second section (37) is caused to vary with respect to the first (40) during the extrusion, such that the portion of the extruded profile that corresponds to the lip (12), with respect to the portion of the extruded profile that corresponds to the base (11), has an orientation that varies within the length of said profile.

2. Method according to Claim 1, characterised in that the flow of material is divided into two flows, one of which is directed towards the first section (40), the other towards the second section (37), and in that the variation in orientation of the second section (37) is accompanied by a displacement corresponding to the first flow with respect to the second flow.

3. Method according to one of Claims 1 or 2, characterised in that the portion of the extruded profile that corresponds to the lip (12) is caused to vary in height during extrusion.

4. Device for producing a gasket (10), particularly for a motor vehicle, said gasket (10) having a base (11) and a lip (12), said device comprising a die (20) through which a flow of material is extruded, this die (20) having an extrusion orifice (37, 40) that has a first section (40) corresponding to the base (11) of the gasket (10) and a second section (37) extending from the first section and corresponding to the lip (12), characterized in that the second section (37) is moveable and in that the device comprises drive means (43, 43a, 44, 45, M1) to cause the orientation of the second section (37) to vary with respect to the first (40) during extrusion.

5. Device according to Claim 4, characterized in that the second section (37) pivots with respect to the first section (40) about an axis (A) that is parallel to the direction of extrusion and is located in the vicinity of the first section (40).

6. Device according to Claim 5, characterized in that the first section (40) is fed by a portion of the flow of material through a channel (42) passing through a fixed portion (21) of the die (20), the second section (37) being fed by another portion of the flow of material through a channel (27, C, 35, 36), which passes through a portion (22) of the die (20) is moveable by pivoting with respect to the fixed portion (21) about the axis of pivoting (A) of the second section (37) with respect to the first section, the pivoting of the second section (37) with respect to the first (40) leading to the pivoting of the moveable portion (22) with respect to the fixed portion (21).

7. Device according to one of Claims 4 to 6, characterized in that at least one high-pressure dynamic annular gasket (34) is interposed between the moveable portion (22) and the fixed portion (21), this gasket (34) being arranged upstream of means (30, 33) that ensure the pivoting of the moveable portion (22) with respect to the fixed portion (21), so as to isolate these means (30, 33) from the extruded material.

8. Device according to Claim 7, characterised in that the pivoting means comprise a ball thrust (30) interposed between a seat of the fixed portion (21) and an outer annular shoulder (32) of the moveable portion (22), the pivoting means also comprising a pivoting ring (33) surrounding the moveable portion (22) upstream of the annular shoulder (32).

9. Device according to Claim 8, characterised in that the moveable portion (22) has a chamber (C) communicating with the feeding channel (27, C, 35, 36) that passes through said moveable portion (22), this chamber (C) having a bottom (26a) that constitutes a seat on which the material exerts a pressure, which presses the annular shoulder (32) against the ball thrust (30).

10. Device according to one of Claims 4 to 9, characterised in that the drive means of the second extrusion section (22) comprise an arm (43) articulated by a connecting rod (43a) to drive means (M1) displacing, in a controlled manner, one end of said connecting rod (43a) in translation, said arm (43) having, at its end opposite the connecting rod (43a), a slot (44) co-operating with a lug (45) integral with the moveable part (39) on which the second section (37) is installed.

11. Device according to one of Claims 4 to 10, characterised in that it further comprises means (46, 47, 48, M2) for causing the portion of the profile that is to be extruded and corresponds to the lip (12) to vary in height during extrusion.

12. Device according to Claim 11, characterised in that these means comprise a cutter (46) capable of sliding within means forming a guide (47) carried by a fixed part (41) of the die (20), the device comprising means (48, M2) for driving the cutter (46), which displace the blade thereof in front of the second section (37), so as to cause the portion of the extruded profile that corresponds to the lip (12) to vary in height during extrusion.

13. Device according to Claim 12, characterised in that the blade of the cutter (46) is substantially curved inwards in a concave manner and covers a sufficient angular sector to be able to cause a variation in the height of the portion of the extruded profile that corresponds to the lip (12) for all the possible orientations of the second section (37) with respect to the first (40).

14. Device according to one of Claims 4 et seq., characterised in that the means for driving the cutter (46) comprise a connecting rod (48) articulated to the cutter (46) and to drive means (M2) displacing in a controlled manner the end of said connecting rod (48) in a translation movement.

15. Extruded gasket (10) produced by the method according to one of Claims 1 to 3.

## Patentansprüche

1. Verfahren für die Herstellung einer Dichtung (10), insbesondere für Kraftfahrzeuge, wobei die Dichtung (10) einen Befestigungsfuß (11) und eine Lippe (12) aufweist, in dem ein Materialfluß durch ein Spritzmundstück (20) hindurch extrudiert wird, dessen Extrusionsöffnung (37, 40) einen ersten Querschnitt (40), der dem Fuß (11) der Dichtung (10) entspricht, und einen zweiten Querschnitt (37) aufweist, der sich vom ersten Querschnitt (40) ausgehend erstreckt und der der Lippe (12) der Dichtung (10) entspricht, dadurch gekennzeichnet, daß die Ausrichtung des zweiten Querschnittes (37) in bezug auf den ersten (40) im Verlauf des Extrudierens derart verändert wird, daß der Querschnitt des extrudierten Profils, der der Lippe (12) entspricht, in bezug auf den Querschnitt des extrudierten Profils, der dem Fuß (11) entspricht, eine Ausrichtung aufweist, die über die Länge des Profils variiert.

2. Verfahren nach Anspruch 1, dadurch gekennzeichnet, daß der Materialfluß in zwei Flüsse getrennt wird, von denen der eine zum ersten Querschnitt (40) und der andere zum zweiten Querschnitt (37) geleitet wird, und daß die Veränderung der Ausrichtung des zweiten Querschnitts (37) von einer entsprechenden Verschiebung des ersten Flusses in bezug auf den zweiten Fluß begleitet wird.

3. Verfahren nach Anspruch 1 oder 2, dadurch gekennzeichnet, daß im Verlauf des Extrudierens die Höhe des Querschnittes des extrudierten Profils, der der Lippe (12) entspricht, verändert wird.

4. Vorrichtung für die Herstellung einer Dichtung (10), insbesondere für Kraftfahrzeuge, wobei die Dichtung (10) einen Fuß (11) und eine Lippe (12) aufweist und die Vorrichtung ein Spritzmundstück (20) aufweist, durch das hindurch ein Materialfluß extrudiert wird, wobei das Spritzmundstück (20) eine Extrusionsöffnung (37, 40) aufweist, die einen ersten Querschnitt (40), der dem Fuß (11) der Dichtung (10) entspricht, und einen zweiten Querschnitt (37) aufweist, der sich vom ersten Querschnitt ausgehend erstreckt und der der Lippe (12) entspricht, dadurch gekennzeichnet, daß der zweite Querschnitt (37) beweglich ist und daß die Vorrichtung Mitnehmereinrichtungen (43, 43a, 44, 45, M1) aufweist, um die Ausrichtung des zweiten Querschnitts (37) in bezug auf den ersten (40) im Verlauf einer Extrusion zu verändern.

5. Vorrichtung nach Anspruch 4, dadurch gekennzeichnet, daß der zweite Querschnitt (37) in bezug auf den ersten Querschnitt (40) um eine Achse (A) herum schwenkt, die parallel zur Extrusionsrichtung ist und die sich in der Nähe des ersten Querschnittes (40) befindet.

6. Vorrichtung nach Anspruch 5, dadurch gekennzeichnet, daß der erste Querschnitt (40) mit einem Teil des Materialflusses durch einen Kanal (42) gespeist wird, der durch einen festen Teil (21) des Spritzmundstücks (20) hindurch verläuft, wobei der zweite Querschnitt (37) mit einem anderen Teil des Materialflusses durch einen Kanal (27, C, 35, 36) gespeist wird, der durch einen Teil (22) des Spritzmundstücks (20) hindurch verläuft, der in bezug auf den festen Teil (21) um die Schwenkachse (A) des zweiten Querschnittes (37) in bezug auf den ersten Querschnitt herum schwenkbeweglich ist, wobei das Schwenken des zweiten Querschnittes (37) in bezug auf den ersten (40) dieses von dem beweglichen Teil (22) in bezug auf den festen Teil (21) zur Folge hat.

7. Vorrichtung nach einem der Ansprüche 4 bis 6, dadurch gekennzeichnet, daß wenigstens eine dynamische Hochdruckringdichtung (34) zwischen dem beweglichen Teil (22) und dem festen Teil (21) zwischengefügt ist, wobei die Dichtung (34) vor den Einrichtungen (30, 33) angeordnet ist, die für das Schwenken des beweglichen Teils (22) in bezug auf den festen Teil (21) sorgen, so daß sie diese Einrichtungen (30, 33) vom extrudierten Material trennt.

8. Vorrichtung nach Anspruch 7, dadurch gekennzeichnet, daß die Schwenkeinrichtungen ein Axialkugellager (30) aufweisen, das zwischen eine Auflagefläche, die der feste Teil (21) aufweist, und einen ringförmigen äußeren Absatz (32) zwischengefügt ist, den der bewegliche Teil (22) aufweist, wobei die Schwenkeinrichtungen ebenfalls einen Schwenkring (33) aufweisen, der den beweglichen Teil (22) vor dem ringförmigen Absatz (32) umschließt.

9. Vorrichtung nach Anspruch 8, dadurch gekennzeichnet, daß der bewegliche Teil (22) eine Kammer (C) aufweist, die mit dem Versorgungskanal (27, C, 35, 36), der durch den beweglichen Teil (22) hindurch verläuft, in Verbindung steht, wobei die Kammer (C) einen Boden (26a) aufweist, der eine Auflagefläche bildet, auf die das Material einen Druck ausübt, der den ringförmigen Absatz (32) auf das Axialkugellager (30) drückt.

10. Vorrichtung nach einem der Ansprüche 4 bis 9, dadurch gekennzeichnet, daß die Mitnehmereinrichtungen des zweiten Extrusionsquerschnittes (22) einen Arm (43) aufweisen, der durch eine Anlenkstange (43a) an Motoreinrichtungen (M1) angelenkt ist, die ein Ende der Anlenkstange (43a) gesteuert in Bewegungsrichtung verschieben, wobei der Arm (43) an seinem der Anlenkstange (43a) entgegengesetzten Ende ein Langloch (44) aufweist, das mit einem Ansatzstück (45) zusammenwirkt, das fest mit dem beweglichen Teil (39) verbunden ist, an dem der zweite Querschnitt (37) ausgespart ist.

11. Vorrichtung nach einem der Ansprüche 4 bis 10, dadurch gekennzeichnet, daß sie darüber hinaus Einrichtungen (46, 47, 48, M2) aufweist, um die Höhe des Querschnittes des zu extrudierenden Profils, der der Lippe (12) entspricht, im Verlauf einer Extrusion zu verändern.

12. Vorrichtung nach Anspruch 11, dadurch gekennzeichnet, daß die Einrichtungen eine Schneide (46) aufweisen, die geeignet ist, in eine Führung (47) bildenden Einrichtungen zu gleiten, die von einem festen Teil (41) des Spritzmundstücks (20) getragen werden, wobei die Vorrichtung Einrichtungen (48, M2) zum Antreiben der Schneide (46) aufweist, die den Rand bzw. die Schnittfläche von dieser vor dem zweiten Querschnitt (37) bewegen, so daß die Höhe des Querschnittes des extrudierten Profils, der der Lippe (12) entspricht, im Verlauf einer Extrusion verändert wird.

13. Vorrichtung nach Anspruch 12, dadurch gekennzeichnet, daß der Rand der Schneide (46) leicht konkav gebogen ist und einen Winkelsektor überdeckt, der ausreicht, um die Höhe des Querschnittes des extrudierten Profils, der der Lippe (12) entspricht, für alle möglichen Ausrichtungen des zweiten Querschnittes (37) in bezug auf den ersten (40) verändern zu können.

14. Vorrichtung nach einem der Ansprüche 4 oder den folgenden, dadurch gekennzeichnet, daß die Einrichtungen zum Antreiben der Schneide (46) einen Anlenkhebel (48) aufweisen, der an der Schneide (46) und an Motoreinrichtungen (M2) angelenkt ist, die das Ende der Anlenkstange (48) gemäß einer Verschiebebewegung gesteuert bewegen.

15. Extrudierte Dichtung (10), die gemäß dem Verfahren nach einem der Ansprüche 1 bis 3 hergestellt ist.
